# EUROPEAN PATENT APPLICATION

(11) **EP 4 772 978 A1**
(43) Date of publication of application: **08.07.2026**
(21) Application number: 24928725.1
(22) Date of filing: 13.12.2024
(51) Int. Cl.: G06F 3/04815, G06F 3/0484, G06F 40/40, G06F 9/451, G06N 3/04, G06F 3/16, H04L 51/02

(54) **ELECTRONIC APPARATUS AND CONTROL METHOD THEREOF**

(30) Priority: 04.03.2024 KR 20240030421
(71) Applicant: Samsung Electronics Co., Ltd., Suwon-si, Gyeonggi-do 16677 (KR)
(72) Inventor: HWANG, Sungjun, Suwon-si Gyeonggi-do 16677 (KR); BABIO FERNANDEZ, Guadalupe, SAN FRANCISCO, California 94111 (US); LEI, Kar Yee Kelly, SAN FRANCISCO, California 94111 (US); SU, Pai Fang, SAN FRANCISCO, California 94111 (US); LEIGH, Sang-won, SAN FRANCISCO, California 94111 (US)
(74) Representative: Appleyard Lees IP LLP
(86) International application number: PCT/KR2024/096978
(87) International publication number: WO 2025/187928

(57) **Abstract**

An electronic device, including: at least one processor; and a memory configured to store at least one instruction which, when executed by the at least one processor, causes the electronic device to: identify content preference information associated with a user based on natural language processing (NLP), determine content architecture information corresponding to a user interface (UI) screen and visual element information corresponding to the UI screen based on the content preference information and context information associated with the user, and generate the UI screen based on the content architecture information and the visual element information.

## Description

### [Technical Field]

The disclosure relates to an electronic device and a controlling method thereof, and more particularly, to an electronic device that provides a user interface (UI) screen, and a controlling method thereof.

### [Background Art]

Spurred by the development of electronic technologies, various types of electronic devices are being developed and distributed. In particular, display devices such as a television (TV), a laptop computer, etc. are being developed in various forms.

In general, a display device provides various user interface (UI) screens such as a home UI screen. However, there is inconvenience that, to personalize or customize a UI screen, the user may need to to perform many manipulations.

### [Disclosure]

### [Technical Solution]

In accordance with an aspect of the disclosure, an electronic device includes: at least one processor; and a memory configured to store at least one instruction which, when executed by the at least one processor, causes the electronic device to: identify content preference information associated with a user based on natural language processing (NLP), determine content architecture information corresponding to a user interface (UI) screen and visual element information corresponding to the UI screen based on the content preference information and context information associated with the user, and generate the UI screen based on the content architecture information and the visual element information.

The at least one instruction may further cause the electronic device to: identify visual preference information associated with the user and digital action preference information associated with the user based on the natural language processing, determine integrated preference information associated with the user based on the content preference information, the visual preference information, and the digital action preference information, and determine the content architecture information and the visual element information based on the integrated preference information and the context information.

The at least one instruction may further cause the electronic device to: filter a preferred content from among a plurality of contents based on the content preference information and the context information, and determine the content architecture information by inputting information about the preferred content into a first neural network model, and the content architecture information may include category information and priority information regarding the filtered content.

The at least one instruction may further cause the electronic device to: determine information related to a visual layout based on the content architecture information, and determine the visual element information by inputting the information related to the visual layout into a second neural network model, and the visual element information may include UI layout information and UI asset information for the UI screen.

The at least one instruction may further cause the electronic device to: filter a preferred content from among a plurality of contents based on the content preference information and the context information, and determine the content architecture information and the visual element information by inputting information related to the preferred content and information related to a visual layout into a third neural network model.

The at least one instruction may further cause the electronic device to: determine the content preference information by applying the NLP to user information obtained using at least one of an onboarding process performed by the electronic device, a chatbot service, a voice recognition assistant service, and an external device.

The at least one instruction may further cause the electronic device to: identify an intimacy level between the user and the electronic device based on at least one of a level of the user information, use frequency of the user with respect to the electronic device, and a use pattern of the user with respect to the electronic device, select a question for obtaining additional information associated with the user based on the intimacy level, obtain the additional information using at least one of the chatbot service and the voice recognition assistant service based on the selected question, and update the UI screen based on the additional information.

The at least one instruction may further cause the electronic device to: determine the context information based on an internal context of the electronic device, an external context of the electronic device, a real-time context of the user, and a use context based on use history of the user.

The at least one instruction may further cause the electronic device to: obtain the content preference information using a large language model (LLM).

The at least one instruction may further cause the electronic device to: generate a personalized home UI screen including a home background image personalized to the user, content categories, representative images for each content category, and UI fonts based on the content architecture information and the visual element information.

In accordance with an aspect of the disclosure, a method of controlling an electronic device includes: identifying content preference information associated with a user based on natural language processing (NLP); determining content architecture information corresponding to a user interface (UI) screen and visual element information corresponding to the UI screen based on the content preference information and context information associated with the user; and obtaining the UI screen based on the content architecture information and the visual element information.

The method may further include: identifying visual preference information associated with the user and digital action preference information associated with the user based on the natural language processing; and determining integrated preference information associated with the user based on the content preference information, the visual preference information, and the digital action preference information, and the content architecture information and the visual element information may be determined based on the integrated preference information and the context information.

The method may further include: filtering a preferred content from among a plurality of contents based on the content preference information and the context information; and determining the content architecture information by inputting information on the preferred content into a first neural network model, and the content architecture information may include category information and priority information regarding the filtered content.

The method may further include: obtaining information related to a visual layout based on the content architecture information; and obtaining the visual element information by inputting the information related to the visual layout into a second neural network model, and wherein the visual element information may include UI layout information and UI asset information for the UI screen.

In accordance with an aspect of the disclosure, a non-transitory computer-readable medium stores computer instructions which, when executed by a processor of an electronic device, cause the electronic device to: identify content preference information of a user based on natural language processing (NLP); determine content architecture information corresponding to a user interface (UI) screen and visual element information corresponding to the UI screen based on the content preference information and context information associated with the user; and obtain the UI screen based on the content architecture information and the visual element information.

### [BRIEF DESCRIPTION OF DRAWINGS]

FIG. 1 is a diagram illustrating an operation of an electronic system according to an embodiment;
FIG. 2A is a block diagram illustrating a configuration of an electronic device according to one or more embodiments;
FIG. 2B is a block diagram illustrating in detail a configuration of an electronic device according to one or more embodiments;
FIG. 3 is a flow chart illustrating a controlling method of an electronic device according to one or more embodiments;
FIG. 4 is a diagram illustrating natural language processing according to one or more embodiments;
FIG. 5 is a flow chart illustrating a controlling method of an electronic device according to one or more embodiments;
FIG. 6A is a diagram illustrating a method of obtaining information by using a neural network model according to one or more embodiments;
FIG. 6B is a diagram illustrating a method of obtaining information by using a neural network model according to one or more embodiments;
FIG. 7 is a flow chart illustrating a controlling method of an electronic device according to one or more embodiments;
FIG. 8 is a diagram illustrating a method of obtaining information by using a neural network model according to one or more embodiments;
FIG. 9 is a diagram illustrating an operation of an electronic device according to one or more embodiments;
FIG. 10 is a flow chart illustrating a controlling method of an electronic device according to one or more embodiments;
FIG. 11A is a diagram illustrating a method of providing a personalized UI screen according to one or more embodiments;
FIG. 11B is a diagram illustrating a method of providing a personalized UI screen according to one or more embodiments;
FIG. 11C is a diagram illustrating a method of providing a personalized UI screen according to one or more embodiments;
FIG. 11D is a diagram illustrating a method of providing a personalized UI screen according to one or more embodiments;
FIG. 11E is a diagram illustrating a method of providing a personalized UI screen according to one or more embodiments;
FIG. 11F is a diagram illustrating a method of providing a personalized UI screen according to one or more embodiments;
FIG. 11G is a diagram illustrating a method of providing a personalized UI screen according to one or more embodiments;
FIG. 11H is a diagram illustrating a method of providing a personalized UI screen according to one or more embodiments;
FIG. 11I is a diagram illustrating a method of providing a personalized UI screen according to one or more embodiments;
FIG. 11J is a diagram illustrating a method of providing a personalized UI screen according to one or more embodiments;
FIG. 11K is a diagram illustrating a method of providing a personalized UI screen according to one or more embodiments;
FIG. 12A is a diagram illustrating an example of a personalized UI screen according to one or more embodiments; and
FIG. 12B is a diagram illustrating an example of a personalized UI screen according to one or more embodiments.

### [DETAILED DESCRIPTION OF EXEMPLARY EMBODIMENTS]

Below, examples of terms used herein are described briefly, and embodiments of the disclosure are described in detail.

Also, to describe embodiments of the disclosure, general terms that are currently used widely were selected as far as possible, in consideration of the functions described in the disclosure. However, the terms may vary depending on the intention of those skilled in the art who work in the pertinent field or relevant court decisions, or emergence of new technologies, etc. Further, in particular cases, there may be terms that are designated by the applicant, and in such cases, the meaning of the terms is described in detail in the relevant descriptions in the disclosure. Accordingly, the terms used in the disclosure should be defined based on the meaning of the terms and the overall content of the disclosure, but not just based on the names of the terms.

Also, in the disclosure, expressions such as "have," "may have," "include," and "may include" denote the existence of such characteristics (e.g., elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in this specification may describe various elements regardless of any order and/or degree of importance. Also, such expressions are used only to distinguish one element from another element, and are not intended to limit the elements.

Meanwhile, description specifying that one element (e.g., a first element) is "(operatively or communicatively) coupled with/to" or "connected to" another element (e.g., a second element) should be interpreted to include both the case where the one element is directly coupled to the another element, and the case where the one element is coupled to the another element through still another element (e.g., a third element).

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

As used herein, the expression "a device configured to" may mean that the device "is capable of" performing an operation together with another device or component. For example, the phrase "a processor configured to perform A, B, and C" may mean a dedicated processor (e.g., an embedded processor) for performing the corresponding operations, or a generic-purpose processor (e.g., a central processing unit (CPU) or an application processor) that may perform the corresponding operations by executing one or more software programs stored in a memory device.

Also, singular expressions include plural expressions, unless defined differently in context. In addition, in the disclosure, terms such as "include" or "consist of' should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

In addition, in embodiments of the disclosure, "a module" or "a part" may perform at least one function or operation, and may be implemented as hardware or software, or implemented as a combination of hardware and software. Also, a plurality of "modules" or a plurality of "parts" may be integrated into at least one module and implemented as at least one processor, or "a module" or "a part" may be implemented as specific hardware.

According to one or more embodiments, various elements and areas in drawings are illustrated schematically. Accordingly, the technical idea of the disclosure is not limited by the relative sizes or intervals illustrated in the accompanying drawings.

Hereinafter, embodiments of the disclosure are described in more detail with reference to the accompanying drawings.

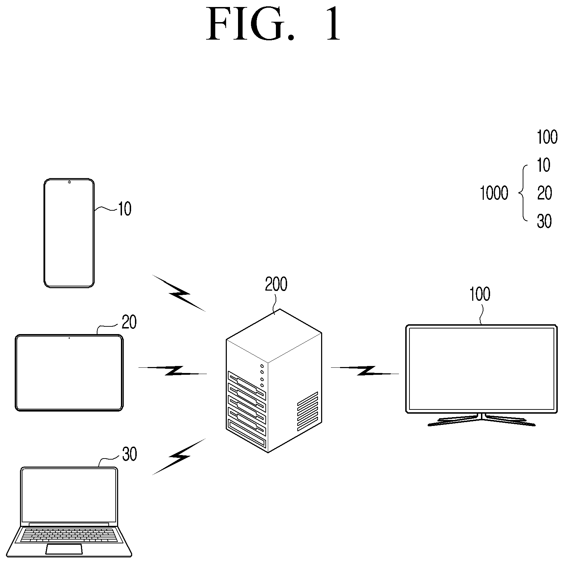

FIG. 1 is a diagram illustrating an operation of an electronic system according to one or more embodiments.

According to FIG. 1, a plurality of devices 1000 may include an electronic device 100, an electronic device 10, an electronic device 20, and an electronic device 30. The plurality of devices 1000 may perform communication through a server 200. According to one or more embodiments, the plurality of devices 1000 may be various Internet of Things (IoT) devices. For example, the plurality of devices 1000 may be Internet of Things (IoT) devices supporting a Wi-Fi module. For example, one or more of the plurality of devices 1000 may be implemented as various types of electronic devices such as a television (TV), a mobile phone, a smartphone, a tablet, a notebook, a laptop, an electronic photo frame, a portable media player (PMP), an MP3 player, a game machine, a large format display (LFD), a monitor, a projector system, etc.

According to one or more embodiments, the electronic device 100 among the plurality of devices 1000 may be implemented as a TV. For example, a user may log on to a server 200 through a user account at the electronic device 100. The electronic device 100 may perform communication with the server 200 based on the logged-on user account. The server 200 may manage the plurality of devices 1000 registered on the user account. Here, the server 200 may be implemented as a cloud server, but embodiments are not limited thereto.

According to one or more embodiments, if the plurality of devices 1000 are registered on a user account, the server 200 may transmit data received from the plurality of devices 1000 to the first electronic device 100 that performs communication with the server 200 based on the user account on which the plurality of devices 1000 are registered. According to one or more embodiments, the server 200 may transmit data stored in the server 200 or data received from one or more of the plurality of devices 1000 to the electronic device 100 according to a request of the electronic device 100.

Meanwhile, the electronic device 100 may provide a user interface (UI) screen, e.g., a home UI screen based on a logged-on user account. Hereinafter, examples of providing a personalized UI screen based on preference information and context information of a user are explained.

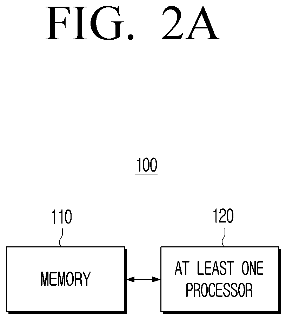

FIG. 2A is a block diagram illustrating a configuration of an electronic device according to one or more embodiments.

According to FIG. 2A, the electronic device 100 may include memory 110 and at least one processor 120.

The electronic device 100 may be implemented as a display device in various types, such as a TV, a monitor, a personal computer (PC), a kiosk, a tablet PC, an electronic photo frame, a mobile phone, a head mounted display (HMD), a near eye display (NED), a large format display (LFD), digital signage, a digital information display (DID), a video wall, a projector display etc., or an image processing device that provides images to a display device (e.g., a set-top box, a one connected box).

The memory 110 may store data used in various embodiments. The memory 110 may be implemented as at least one of a memory embedded in the electronic device 100and a memory that may be be attached to or detached from the electronic device 100 according to the use of stored data. For example, in the case of data for driving the electronic device 100, the data may be stored in memory embedded in the electronic device 100, and in the case of data for an extended function of the electronic device 100, the data may be stored in memory that can be attached to or detached from the electronic device 100. In some embodiments, in the case of memory embedded in the electronic device 100, the memory may be implemented as at least one of volatile memory (e.g., dynamic RAM (DRAM), static RAM (SRAM), or synchronous dynamic RAM (SDRAM), etc.) or non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash, etc.), a hard drive, and a solid state drive (SSD)). Also, in the case of memory that can be attached to or detached from the electronic device 100, the memory may be implemented as one or more of a memory card (e.g., compact flash (CF), secure digital (SD), micro secure digital (Micro-SD), mini secure digital (Mini-SD), extreme digital (xD), a multi-media card (MMC), etc.) and external memory that can be connected to a USB port (e.g., a USB memory), etc.

According to one or more embodiments, the memory 110 may store a computer program including at least one instruction or instructions for controlling the electronic device 100.

The at least one processor 120 may control the overall operations of the electronic device 100. For example, the at least one processor 120 may be connected with each component of the electronic device 100, and may control the overall operations of the electronic device 100. For example, the at least one processor 120 may be electrically connected with the display 130 and the memory 110, and may control the overall operations of the electronic device 100. The at least one processor 120 may be a single processor or a plurality of processors.

The at least one processor 120 may perform operations of the electronic device 100 according to various embodiments by executing the at least one instruction stored in the memory 110.

According to one or more embodiments, functions related to artificial intelligence (AI) according to the disclosure may be performed by the processor and the memory of the electronic device.

The at least one processor 120 may consist of one or a plurality of processors. Here, the one or plurality of processors may include at least one of a CPU, a graphic processing unit (GPU), and a neural processing unit (NPU), but the processors are not limited to the aforementioned examples of processors.

A CPU may refer to a generic-purpose processor that may perform not only general operations but also AI operations, and may effectively execute a complex program using a multilayer cache structure. A CPU may be advantageous for a serial processing method that enables a systemic linking between the previous calculation result and the next calculation result through sequential calculations. However, these are only examples, and the generic-purpose processor is not limited thereto.

A GPU may be a processor for mass operations such as a floating point operation used for graphic processing, etc., and it can perform mass operations in parallel by massively integrating cores. In particular, a GPU may be advantageous for a parallel processing method such as a convolution operation, etc. compared to a CPU. Also, a GPU may be used as a co-processor for supplementing the function of a CPU. However, these are only examples, and the processor for mass operations is not limited thereto.

An NPU may be a processor specialized for an AI operation using an artificial neural network, and it can implement each layer included in an artificial neural network as hardware (e.g., silicon). Here, the NPU may be designed to be specialized according to the required specification of a company, and thus it has a lower degree of freedom compared to a CPU or a GPU, but it can effectively process an AI operation required by the company. According to one or more embodiments, as a processor specialized for an AI operation, an NPU may be implemented in various forms such as a tensor processing unit (TPU), an intelligence processing unit (IPU), a vision processing unit (VPU), etc. However, these are only examples, and the AI processor is not limited thereto.

Also, the at least one processor 120 may be implemented as a system on chip (SoC). In the SoC, the memory 110, and a network interface such as a bus for data communication between the at least one processor 120 and the memory 110, etc. may be further included in addition to the at least one processor 120.

When the plurality of processors are included in the system on chip (SoC) included in the electronic device 100, the electronic device 100 may perform an operation related to AI (e.g., an operation related to learning or inference of the neural network model) by using some processors among the plurality of processors. For example, the electronic device 100 may perform an operation related to AI by using at least one of a GPU, an NPU, a VPU, a TPU, and a hardware accelerator specified for or configured to implement AI operations such as a convolution operation, a matrix product operation, etc. among the plurality of processors. However, this is merely an example, and embodiments are not limited thereto. For example, according to one or more embodiments, the electronic device 100 may process an operation related to AI by using a generic-purpose processor such as a CPU, etc.

Also, the electronic device 100 may perform operations for functions related to AI by using a multicore (e.g., a dual core, a quad core, etc.) included in one processor. In particular, the electronic device 100 may perform AI operations such as a convolution operation, a matrix product operation, etc. in parallel by using the multicore included in the processor.

The at least one processor 120 may process input data according to predefined operation rules or a neural network model (or an AI model) stored in the memory 110. The predefined operation rules or the AI model may be characterized in that they are made through learning.

Here, being made through learning may mean that predefined operation rules or an AI model having desired characteristics may be made by applying a learning algorithm to a plurality of pieces of training data. Such learning may be performed in a device itself wherein AI is performed according to the disclosure, or performed through a separate server/system.

A neural network model may include of a plurality of neural network layers. At least one layer may have at least one weight value, and may perform an operation of the layer using the operation result of the previous layer and at least one defined operation. Examples of a neural network may include a convolutional neural network (CNN), a recurrent neural network (RNN), a deep neural network (DNN), a restricted Boltzmann Machine (RBM), a deep belief network (DBN), a bidirectional recurrent deep neural network (BRDNN), deep Q-networks, and a transformer, but the neural network is not limited thereto.

A learning algorithm may refer to a method of training a specific subject device (e.g., a robot) using a plurality of pieces of training data and thereby making the specific subject device make a decision or make prediction by itself. Examples of learning algorithms may include supervised learning, unsupervised learning, semi-supervised learning, or reinforcement learning, but learning algorithms are not limited thereto.

According to one or more embodiments, the at least one processor 120 may identify content preference information of, or associated with, the user based on natural language processing (NLP). As an example, the at least one processor 120 may identify content preference information of the user based on natural language processing using a large language model (LLM). For example, the at least one processor 120 may identify content preference information by applying natural language processing to at least one of user information obtained in an onboarding process of the electronic device 100, user information obtained using a chatbot service, user information obtained using a voice recognition assistant service, and user information obtained from an external device.

According to one or more embodiments, the at least one processor 120 may obtain context information based on an internal context of the electronic device 100, an external context of the electronic device 100, a real-time context of the user, and a use context based on use history of the user.

According to one or more embodiments, the at least one processor 120 may identify or determine content architecture information for, or corresponding to, a user interface (UI) screen and visual element information for, or corresponding to, the UI screen based on the content preference information and the context information.

According to one or more embodiments, the at least one processor 120 may generate or otherwise obtain a UI screen based on the content architecture information and the visual element information. For example, the at least one processor 120 may generate or obtain a personalized home UI screen including a home background image personalized to the user, content categories, representative images for each content category, and UI fonts based on the content architecture information and the visual element information.

According to one or more embodiments, the at least one processor 120 may identify visual preference information of, or associated with, the user and digital action preference information of, or associated with, the user based on the natural language processing.

According to one or more embodiments, the at least one processor 120 may identify or determine integrated preference information of, or associated with, the user based on the content preference information, the visual preference information, and the digital action preference information, and identify or determine the content architecture information and the visual element information based on the integrated preference information and the context information of the user.

According to one or more embodiments, the at least one processor 120 may filter a preferred content from among a plurality of contents based on the content preference information and the context information of the user, and may obtain or determine the content architecture information by inputting information on the preferred content into a first neural network model.

According to one or more embodiments, the at least one processor 120 may obtain information related to a visual layout based on the content architecture information, and may obtain or determine the visual element information by inputting the information related to the visual layout into a second neural network model.

According to one or more embodiments, the at least one processor 120 may filter a preferred content from among a plurality of contents based on the content preference information and the context information, and obtain or determine the content architecture information and the visual element information by inputting information related to the preferred content and information related to a visual layout into a third neural network model.

According to one or more embodiments, at least one of the first neural network model, the second neural network model, and the third neural network model may be included in at least one of the electronic device 100 and at least one server. According to one or more embodiments, at least one of the first neural network model, the second neural network model, and the third neural network model may be implemented in the electronic device 100, and one or more of the others may be implemented in at least one server.

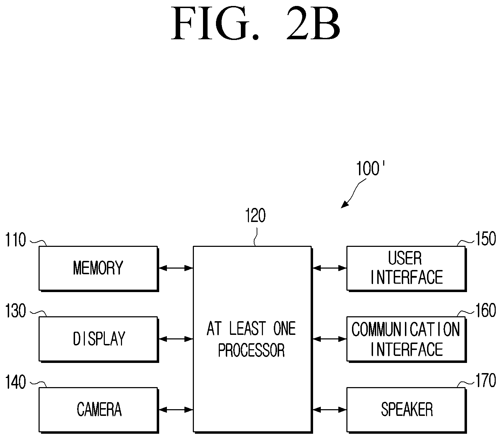

FIG. 2B is a block diagram illustrating in detail a configuration of an electronic device according to one or more embodiments.

According to FIG. 2B, the electronic device 100' may include memory 110, at least one processor 120, a display 130, a camera 140, a user interface 150, a communication interface 160, and a speaker 170. One or more of the components illustrated in FIG. 2Bmay be similar to one or more of the components illustrated in FIG. 2A, and redundant or duplicative description thereof may be omitted.

The display 130 may be implemented as a display including self-luminous elements, or a display including non-self-luminous elements and a backlight. For example, the display 130 may be implemented as displays in various forms such as a liquid crystal display (LCD), an organic light emitting diodes (OLED) display, light emitting diodes (LEDs), micro LEDs, mini LEDs, a plasma display panel (PDP), a quantum dot (QD) display, quantum dot light emitting diodes (QLEDs), etc. Inside the display 130, driving circuits that may be implemented in forms such as an a-si TFT, a low temperature poly silicon (LTPS) TFT, an organic TFT (OTFT), etc., and a backlight unit, etc. may also be included together. According to one or more embodiments, on the front surface of the display 130, a touch sensor such as a touch film, a touch sheet, a touch pad, etc., which may detect a touch operation, may be arranged and implemented to detect various types of touch inputs. For example, the display 130 may detect various types of touch inputs such as a touch input by a user's hand, a touch input by an input device such as a stylus pen, a touch input by a specific electrostatic material, etc. Here, the input device may be implemented as an input device in a pen type that can be referred to as various terms such as an electronic pen, a stylus pen, an S-pen, etc. According to one or more embodiments, the display 130 may be implemented as a flat display, a curved display, a flexible display that can be folded and/or rolled, etc.

According to one or more embodiments, the display 130 may provide an output image which includes a binocular image including at least one image of a new viewpoint.

The camera 140 may be turned on or activated according to a predetermined event and perform photographing operations. The camera 140 may convert a photographed image into an electrical signal, and may generate image data based on the converted signal. For example, a subject may be converted into an electrical image signal through a semiconductor charge coupled device (CCD), and the image signal converted as such may be amplified and converted into a digital signal on which signal processing may be performed. For example, the camera 140 may include at least one of a general (or basic) camera and a super wide angle camera.

According to one or more embodiments, the camera 140 may obtain a user photographed image, and may provide the image to the at least one processor 120. The at least one processor 120 may detect the location of the user's face from the user photographed image, and may identify the user's facial expression by identifying the positions of the user's eyes, mouth, etc. from the user's face, and may identify preference for a content or the user's feeling based on the user's facial expression. As a method for detecting a facial area, various methods, e.g., a direct recognition method and a method using statistics may be used. In the direct recognition method, rules using physical characteristics such as the contour skin color of a facial image and the sizes of components or the distance between each other, etc. are made, and comparison, inspection, and measurement are performed according to the rules. In the method using statistics, a facial area may be detected according to an algorithm that was trained in advance. For example, the method using statistics may be a method of making unique characteristics included in an input face as data, and performing comparative analysis with a relatively large prepared database. In particular, a facial area may be detected according to an algorithm that was trained in advance, and a method such as a multi-layer perceptron (MLP) and a support vector machine (SVM) may be used.

The user interface 150 may be implemented as a device such as a button, a touch pad, a mouse, and a keyboard, or implemented as a touch screen that can perform both of the aforementioned display function and a manipulation input function.

The communication interface 160 may be implemented as various interfaces depending on implementation examples of the electronic device 100'. For example, the communication interface 160 may perform communication with an external device, an external storage medium (e.g., a USB memory), an external server (e.g., a webhard), etc. through communication methods such as Bluetooth, AP-based Wi-Fi (Wi-Fi, a wireless LAN network), Zigbee, a wired/wireless local area network (LAN), a wide area network (WAN), an Ethernet, the IEEE 1394, a high-definition multimedia interface (HDMI), a universal serial bus (USB), a mobile high-definition link (MHL), the Audio Engineering Society/European Broadcasting Union (AES/EBU), Optical, Coaxial, etc. According to one or more embodiments, the communication interface 160 may perform communication with another electronic device, an external server, and/or a remote control device, etc.

The speaker 170 may be a component that outputs not only various kinds of audio data but also various kinds of notification sounds or voice messages, etc. The at least one processor 120 may control the speaker 170 to output feedbacks or various types of notifications according to the various embodiments of the disclosure in audio forms.

Other than the above, the electronic device 100' may include a sensor and a microphone, etc. depending on implementation examples.

The sensor may include various types of sensors such as a touch sensor, a proximity sensor, an acceleration sensor (or a gravity sensor), a geomagnetic sensor, a gyro sensor, a pressure sensor, a position sensor, a distance sensor, an illumination sensor, etc.

The microphone may be a component for receiving input of a user voice or other sounds, and converting them into audio data. However, according to some embodiments, the electronic device 100' may receive a user voice that was input through an external device through the communication interface 160.

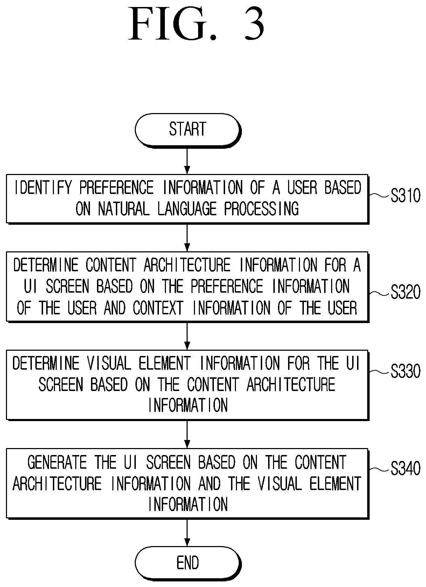

FIG. 3 is a flow chart for illustrating a controlling method of an electronic device according to one or more embodiments.

According to FIG. 3, at operation S310, the electronic device 100 may identify preference information of the user based on natural language processing (NLP).

According to one or more embodiments, the user preference information may include at least one of content preference, visual preference, and digital action preference.

The content preference may indicate the degree that the user prefers contents of a specific type, and it may be diverse according to the user's tastes and interests. For example, the content preference may include at least one of genre preference, media type preference, language preference, writing style preference, preference according to the depth of information, character preference, and content length preference.

According to one or more embodiments, the electronic device 100 may identify the content preference information based on at least one of user information obtained in an onboarding process, user information obtained through a chatbot service, user information obtained through a voice recognition assistant service, and user information obtained from an external device. For example, the electronic device 100 may identify content preference based on the content use history of the user, reaction information for contents, etc. that were obtained according to various methods. For example, a reaction for a content may include at least one of a voice reaction, a chatting reaction, a facial expression reaction, and a gesture reaction.

Onboarding may refer to a process wherein a user who uses the electronic device 100 for the first time learns functions and methods of use of services. For example, the electronic device 100 may obtain user information through questions regarding service preference, content preference, and intimacy to the device in an onboarding process.

The chatbot service may refer to a service of interacting with the electronic device 100 by using a chatbot technology for improving the user's viewing experience.

The voice recognition assistant service may refer to a service of interacting with the electronic device 100 using a voice recognition technology for improving the user's viewing experience.

For example, the electronic device 100 may obtain user information based on at least one of requests and questions through the chatbot service and/or the voice recognition assistant service, e.g., various user requests and/or questions such as user questions regarding the television schedule and broadcasting information, user questions regarding real time TV trends and issues, reminder setting and requests for notifications, requests for event guides, etc.

The visual preference may indicate visual characteristics or aspects which the user may prefer. For example, the visual preference may include the user's tastes regarding visual contents such as design styles, colors, layouts, image styles, font styles, font sizes, etc.

The digital action preference may indicate how the user prefers a specific behavior or action in a digital environment. For example, digital actions may include behaviors that are performed in various digital platforms such as habits of using applications, on-line activities (e.g., on-line shopping, on-line games), consumption of digital media, social media activities, use of digital services, etc. For example, the digital action preference may be identified based on information such as a case wherein the user often uses an application of a specific type, a case wherein the user actively performs a social media activity of a specific type, a case wherein the user actively consumes media through a streaming service or an on-line video platform, a case wherein the user actively plays an on-line game, etc.

According to one or more embodiments, the electronic device 100 may obtain user preference information based on natural language processing. Natural language processing (NLP) may refer to a technology by which a machine understands and processes languages used by humans, and may refer to a technology by which a computer understands and interprets languages of humans and extracts information or figures out the meaning. For example, the electronic device 100 may perform natural language processing for texts corresponding to various types of user information by using a large language model (LLM).

At operation S320, the electronic device 100 may identify or determine content architecture information for, or corresponding to, a UI screen based on the preference information of the user and the context information of the user. According to one or more embodiments, the electronic device 100 may identify or determine integrated preference information of the user based on the content preference information, the visual preference information, and the digital action preference information. Also, according to one or more embodiments, the electronic device 100 may identify or determine the content architecture information based on the integrated preference information and the context information of the user.

According to one or more embodiments, the electronic device 100 may update the user preference information based on the chatbot service and/or the voice recognition assistant service, and also based on the updated context information. For example, the electronic device 100 may obtain the updated context information based on the updated internal context of the electronic device 100, the updated external context of the electronic device 100, the updated real time context of the user, and the updated context based on the use history of the user.

The context information may include various types of information such as information about the device used by the user, time information, environment information, position information, social information, physiological state information, etc. For example, the device information may include information on the device used by the user, the type of the device, the screen size, and the operation system. For example, the time information may include information related to time such as the current time, day, season, etc. For example, the environment information may include weather information, time information, illumination information, etc. as information regarding the ambient environment. For example, the social information may include information related to a social network such as social media activities, a friend list, a contact list, etc. of the user. For example, the physiological state information may include health-related data or physiological information such as the heartrate, the sleep pattern, the amount of activity, etc. through a wearable device.

The content architecture information may include information regarding components of contents included in a UI screen. For example, the content architecture information may include category information regarding contents, and type and/or priority information of contents. For example, the categories regarding contents may include category information for each of preferred contents. For example, the types of contents may include type information such as real time broadcasting, an over the top (OTT) content, a video on demand

(VOD) content, etc. For example, the priority information regarding contents may include priority information regarding each category and contents inside the categories.

At operation S330, the electronic device 100 may identify or determine visual element information for, or corresponding to, a user interface (UI) screen based on the content architecture information. For example, the visual element information may include UI layout information and UI asset information for the UI screen.

The UI layout may refer to a method of arranging and structuralizing design elements of a user interface. For example, the UI layout may include information regarding the structure of a page or a screen, and the positions, the sizes, and the intervals, etc. of the UI elements.

The UI asset information may mean resources that are used in designing and constructing a user interface. For example, the UI asset may include UI component elements such as background images, theme images, skin images, fonts, buttons, icons, color palettes, tooltips, etc.

At operation S340, the electronic device 100 may obtain a UI screen based on the content architecture information and the visual element information. For example, the electronic device 100 may obtain a UI screen based on the content category information, the UI layout information, and the UI asset information. The UI screen may indicate a visual area wherein a specific task is performed or information is displayed on a user interface (UI). For example, the UI screen may be a home UI screen, but embodiments are not limited thereto.

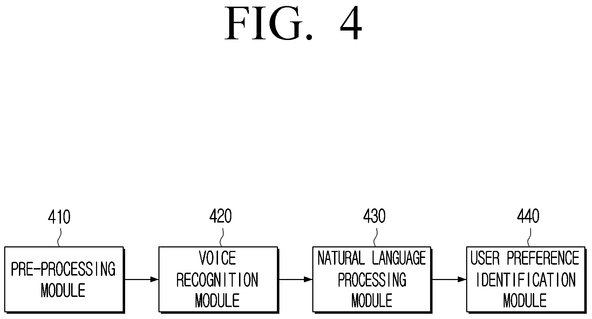

As shown in FIG. 3, an order is mapped for all operations for the convenience of explanation, but embodiments are not limited thereto, and one or more operations may be performed in any order, or for example in parallel.. FIG. 4 is a diagram illustrating natural language processing according to one or more embodiments.

According to FIG. 4, the electronic device 100 may perform natural language processing by using a pre-processing module 410, a voice recognition module 420, a natural language processing module 430, and a user preference identification module 440. In embodiments, the natural language processing module 430 may also be referred to as a a natural language understanding module. For example, each module may be implemented as at least one of software, hardware, and/or a combination thereof. For example, at least one among each module may be implemented to use a predefined algorithm, a predefined formula, and/or a neural network model. Each module and operations of each module may be included in the electronic device 100, but according to one or more embodiments, they may be dispersed in at least one external device (e.g., a server).

The pre-processing module 410 may perform pre-processing for an audio signal received through the microphone. Specifically, the pre-processing module 410 may receive an audio signal in an analog form including a user voice through the microphone, and convert the analog signal into a digital signal. Then, the pre-processing module 410 may extract a user voice section by calculating the energy of the converted digital signal.

The voice recognition module 420 may convert a user voice in the form of audio data received from the pre-processing module 410 into text data. Here, the voice recognition module 420 may include an acoustic model and a language model. The acoustic model may include information related to vocalization, and the language model may include information regarding unit phoneme information and combinations of unit phoneme information. The voice recognition module 420 may convert a user voice into text data by using the information related to vocalization and the information regarding unit phoneme information. The information on the acoustic model and the language model may be stored, for example, in an automatic speech recognition database (ASR DB).

The natural language processing module 430 may identify a domain for a user voice and a user intent by performing tokenization, syntactic analysis, or semantic analysis based on text data regarding a user voice obtained through voice recognition. Here, the syntactic analysis may divide a user input into syntactic units (e.g., a word, a phrase, a morpheme, etc.), and identify which syntactic elements the divided units have. The semantic analysis may be performed by using semantic matching, rule matching, formula matching, etc. In particular, the natural language processing module 430 may obtain, as a result of natural language processing or understanding, the category of a user voice, the intent of the user voice, and a slot (or, an entity, a parameter, etc.) for performing the intent of the user voice.

The user preference identification module 440 may obtain user preference information based on output data of the natural language processing module 430.

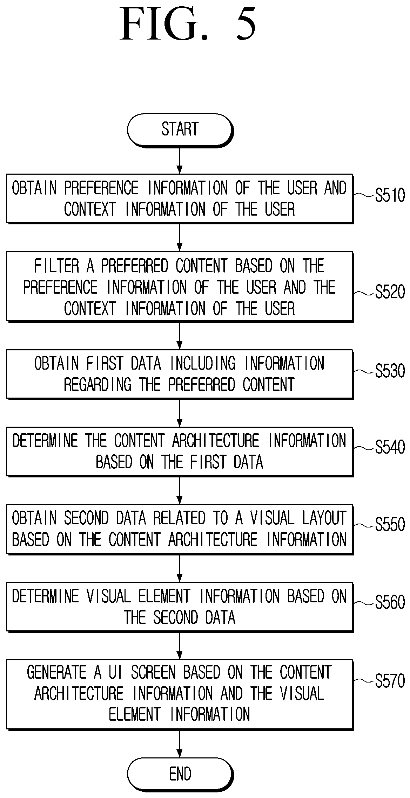

FIG. 5 is a flow chart for illustrating a controlling method of an electronic device according to one or more embodiments.

According to FIG. 5, at operation S510, the electronic device 100 may obtain preference information of the user and context information of the user.

At operation S520, a preferred content may be filtered among a plurality of contents based on the preference information of the user and the context information of the user. According to one or more embodiments, the electronic device 100 may filter a preferred content among a plurality of contents including contents stored in the electronic device 100 and contents provided from an external device.

At operation S530, the electronic device 100 may obtain information regarding a filtered preferred content. For example, the information regarding a preferred content may include attribute information of the content. For example, content attributes may include various attributes such as the content itself, the episodes of the content, the detailed genre (e.g., baseball, real variety), the broadcasting time, the characters, items, sensibility, images, a background screen, audio, scenes, etc.

At operation S540, the electronic device 100 may obtain or generate the content architecture information based on the information regarding the preferred content.

According to one or more embodiments, the electronic device 100 may obtain first data to be input into a first neural network model based on the information regarding the preferred content. For example, the electronic device 100 may obtain the first data by processing the information regarding the preferred content as a series of data sequences. For example, a series of data sequences may be text sequences, but embodiments are not limited thereto.

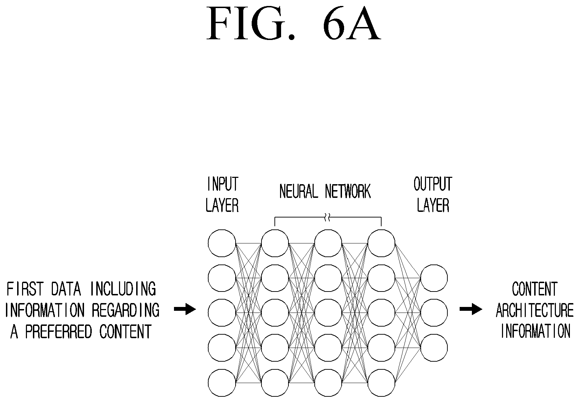

According to one or more embodiments, the electronic device 100 may obtain content architecture information by inputting the first data into the first neural network model as illustrated in FIG. 6A. For example, the first neural network model may be implemented as a generative AI model. The generative AI model may be an AI model that generates a new content based on a given input, and may generate various types of data such as texts, images, voices, etc. The generative AI model may learn data of a large scale (e.g., text data) in advance, and perform fine-tuning for various tasks based on this. The generative AI model may learn patterns of input data based on deep learning architecture such as at least one of a recurrent neural network (RNN), long short-term memory (LSTM), a gated recurrent unit (GRU), and a transformer, and generate new data. For example, the first neural network model may be implemented as various AI models such as a generative adversarial network (GAN) model, a style transfer model, an AI content generator, a transformer-based model, a genetic algorithm for layout optimization, etc.

At operation S550, the electronic device 100 may obtain information related to the visual layout based on the content architecture information. The information related to the visual layout may include information such as design styles, colors, layouts, image styles, font styles, font sizes, etc.

At operation S560, the electronic device 100 may determine or otherwise obtain visual element information based on the information related to the visual layout.

For example, the electronic device 100 may obtain second data by processing the information related to the visual layout as a series of data sequences. For example, a series of data sequences may be text sequences, but embodiments are not limited thereto.

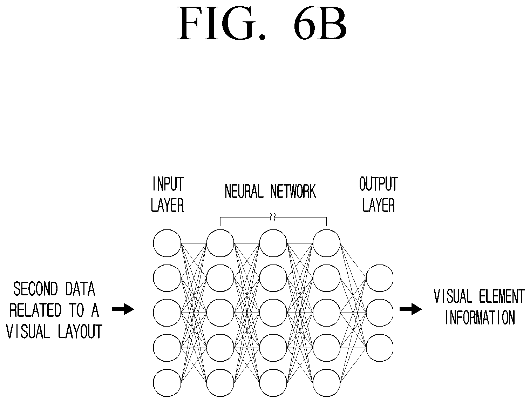

According to one or more embodiments, the electronic device 100 may obtain or determine the visual element information by inputting the second data into a second neural network model as illustrated in FIG. 6B. For example, the second neural network model may be implemented as a generative AI model. For example, the second neural network model may be implemented as various AI models such as a generative adversarial network (GAN) model, a style transfer model, an AI content generator, a transformer-based model, a genetic algorithm for layout optimization, etc.

For example, according to one or more embodiments, when the first neural network model and the second neural network model are implemented in one server, the electronic device 100 may transmit the information regarding the preferred content and the information regarding the visual layout to the server, and receive the visual element information from the server.

As another example, according to another embodiment, when the first neural network model and the second neural network model are implemented in different servers, the electronic device 100 may transmit the information regarding the preferred content to the first server, and receive the information regarding the visual layout from the first server. Then, the electronic device 100 may transmit the information regarding the visual layout to the second server, and receive the visual element information from the second server.

As yet another example, according to one or more embodiments, when the first neural network model and the second neural network model are implemented as on-device models included in the electronic device 100, the electronic device 100 may obtain the information regarding the visual layout by inputting the information regarding the preferred content into the first neural network model. Then, the electronic device 100 may obtain the visual element information by inputting the information regarding the visual layout into the second neural network model.

At operation S570, the electronic device 100 may obtain a UI screen based on the content architecture information and the visual element information.

According to one or more embodiments, the electronic device 100 may generate or obtain a UI screen by combining the content architecture information and the visual element information. For example, the electronic device 100 may obtain a UI screen by combining the content category information, the UI layout information, and the UI asset information. For example, the UI screen may be a home UI screen, but embodiments are not limited thereto.

According to one or more embodiments, the electronic device 100 may generate or otherwise obtain a UI layout screen based on the UI layout information. Also, according to one or more embodiments, the electronic device 100 may obtain a UI screen by identifying representative images and/or titles of contents included in the content architecture information, and arranging the representative images and/or the titles of the contents based on the category information and the priority information of the contents. For example, the electronic device 100 may generate or obtain a final UI screen by alpha blending a first display layer including a UI layout screen and a second display layer including representative images and/or titles. Here, alpha blending may refer to a method of allotting a new value which is alpha (A) to color values RGB, and mixing and displaying background RGB values and RGB values over them, for exerting an effect as if an image is seen through transparently when another image is overlaid on an image.

For example, an alpha value may be divided into a value from 0 to 255 or a value from 0.0 to 1.0, and 0 may mean being completely transparent, and 255 which is opposite thereto (or the highest value such as 1.0) may mean being fully opaque. However, embodiments are not limited thereto. For example, in some embodiments, 0 may mean being fully opaque, and 255 which is opposite thereto (or the highest value such as 1.0) may mean being completely transparent. For example, if eight bits are allotted to an alpha value and a value from 0 to 255 can be expressed, as the value increases, the ratio of the corresponding pixel may become higher, and as the value decreases, the ratio may become lower. For example, by increasing the transparency of an area corresponding to the representative images and/or the titles of contents, the representative images and/or the titles of the contents may be provided in the area.

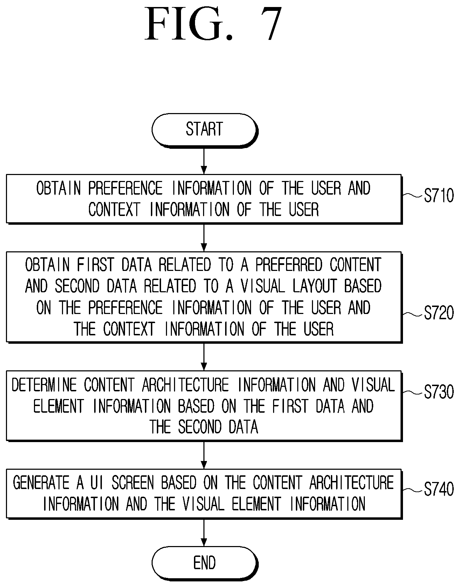

As shown in FIG. 5, an order is mapped for all operation for the convenience of explanation, but embodiments are not limited thereto, and one or more operations may be performed in any order, or for example in parallel. FIG. 7 is a flow chart for illustrating a controlling method of an electronic device according to one or more embodiments.

According to FIG. 7, at operation S710, the electronic device 100 may obtain preference information associated with the user and context information associated with the user.

At operation S720, the electronic device 100 may obtain first data related to a preferred content and second data related to a visual layout based on the preference information of the user and the context information of the user.

At operation S730, the electronic device 100 may obtain content architecture information and visual element information based on the first data and the second data.

According to one or more embodiments, the electronic device 100 may obtain the content architecture information and the visual element information by inputting the first data and the second data into a third neural network model.

For example, the electronic device 100 may obtain the first data by processing the information regarding the preferred content as a series of data sequences, and obtain the second data by processing the information regarding the visual layout as a series of data sequences. For example, a series of data sequences may be text sequences, but embodiments are not limited thereto.

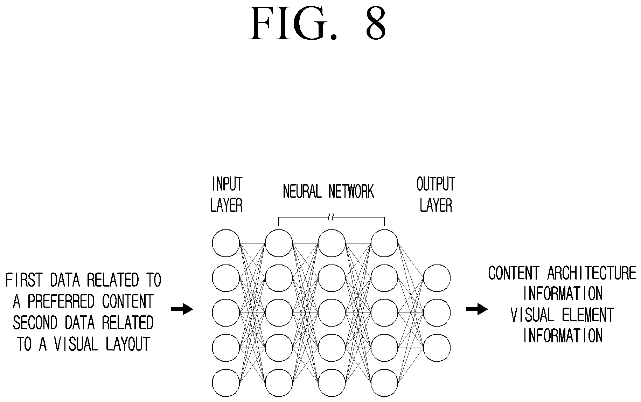

According to one or more embodiments, the electronic device 100 may obtain visual element information by inputting the first data and the second data into the third neural network model as illustrated in FIG. 8. For example, the third neural network model may be implemented as a generative AI model.

According to one or more embodiments, in case the third neural network model is implemented in a server, the electronic device 100 may transmit the information regarding the preferred content and the information regarding the visual layout to the server, and receive the visual element information from the server.

According to another embodiment, in case the third neural network model is implemented as an on-device model included in the electronic device 100, the electronic device 100 may obtain the visual element information by inputting the information regarding the preferred content and the information regarding the visual layout into the third neural network model.

At operation S740, the electronic device 100 may obtain a UI screen based on the content architecture information and the visual element information.

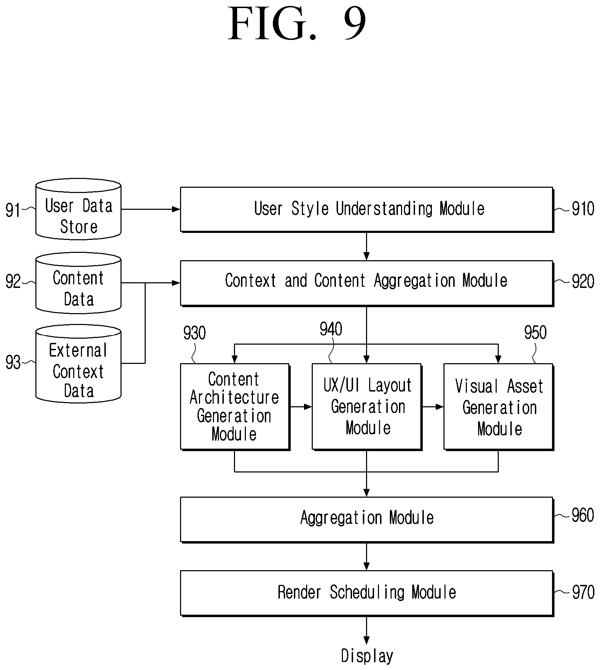

As shown in FIG. 7, an order is mapped for all operations for the convenience of explanation, but embodiments are not limited thereto, and one or more operations may be performed in any order, or for example in parallel. FIG. 9 is a diagram illustrating an operation of an electronic device according to one or more embodiments.

According to FIG. 9, the electronic device 100 may include a user style understanding module 910, a context and content module 920, a content architecture generation module 930, a user experience/user interface (UX/UI) layout generation module 940, a visual asset generation module 950, an aggregation module 960, and a render scheduling module 970. For example, each module may be implemented as at least one software, at least one hardware, and/or a combination thereof. For example, at least one among each module may be implemented to use a predefined algorithm, a predefined formula, and/or a neural network model. Each module and operations of each module may be included in the electronic device 100, but according to one or more embodiments, they may be dispersed in at least one external device (e.g., a server).

The user style understanding module 910 may obtain user preference based on at least one of user data, use history, and context data.

The context and content module 920 may obtain information related to UX/UI customization based on user preference, content data, and context data.

The content architecture generation module 930 may obtain content architecture information and content priority information.

The UX/UI layout generation module 940 may obtain visual layout information based on the content architecture.

The visual asset generation module 950 may obtain UI asset information regarding a UX/UI layout.

The aggregation module 960 may compile the content architecture information, the visual layout information, and the UI asset information into final UX/UI data.

The render scheduling module 970 may render a UI screen based on the final UX/UI data.

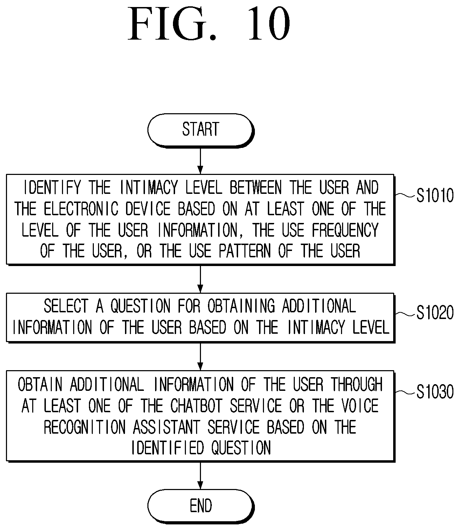

FIG. 10 is a flow chart for illustrating a controlling method of an electronic device according to one or more embodiments.

According to one or more embodiments, in a natural language conversation between the user and the electronic device 100, the user may feel inconvenience about providing his/her taste. Accordingly, in an initial use step and a process wherein intimacy of the user to the system is improving, the user's taste can be naturally updated. For example, intimacy between the user and the system may be identified and divided into a plurality of levels, and questions for identifying the user's taste may be classified according to the intimacy level.

According to FIG. 10, at operation S1010, the electronic device 100 may identify the intimacy level between the user and the electronic device 100 based on at least one of the level of the user information, the use frequency of the user, and the use pattern of the user.

The intimacy between the user and the electronic device 100 may mean the strength of a relation between a specific user and the device of the user.

The level of user information may include a depth level of user information obtained in advance. For example, as the depth level of the user information obtained in advance increases, the electronic device 100 may identify or determine that the intimacy level between the user and the electronic device 100 increases.

The use frequency of the user may include use history information such as a viewing frequency of a content provided from the electronic device 100. For example, as the user uses the electronic device 100 more often, the electronic device 100 may identify or determine that the intimacy level between the user and the electronic device 100 increases.

The use pattern of the user may include information such as contents provided from the electronic device 100, the user's stance regarding questions, etc. For example, as a number of positive responses from the user increases, the electronic device 100 may identify or determine that the intimacy level between the user and the electronic device 100 increases.

At operation S1020, the electronic device 100 may identify or select a question for obtaining additional information of, or associated with, the user based on the intimacy level. For example, as the intimacy level decreases, the depth level of a question may be lower, and as the intimacy level increases, the depth level of a question may be higher. For example, the electronic device 100 may divide the intimacy levels into level 0, level 1, and level 2, and may adjust the depth level of a question differently according to each level.

According to one or more embodiments, the electronic device 100 may obtain information not related to the user such as external information, the assistant setting, etc. in the first level. For example, the electronic device 100 may identify a question of a level such as "Which language do you prefer?"

According to one or more embodiments, the electronic device 100 may obtain information that is related to the user on the surface such as the family composition, etc. in the second level. For example, the electronic device 100 may identify a question of a level such as "What is your family composition like?"

According to one or more embodiments, the electronic device 100 may obtain personal and internal information such as the individual taste of the user, etc. in the third level. For example, as a question of a relatively low depth level, the electronic device 100 may identify a question of a level such as "Do you have any themes or categories that you are interested in?," "Do you have any services or applications that you used before?," "Which color do you prefer?," "Which font and font size do you prefer?," etc.

At operation S1030, the electronic device 100 may obtain additional information of the user through at least one of the chatbot service and the voice recognition assistant service based on the identified question. For example, the electronic device 100 may obtain additional information of the user by providing a question identified based on a predetermined event to the user. For example, the predetermined event may include an event of conversing with the user through the chatbot service and/or the voice recognition assistant service.

According to one or more embodiments, the electronic device 100 may update the user preference information based on the additional information of the user, and obtain updated content architecture information and/or updated visual element information based on the updated preference information. According to one or more embodiments, the electronic device 100 may obtain an updated UI screen based on the updated content architecture information and/or the updated visual element information. For example, the updated UI screen may be a screen wherein contents included in the UI screen were changed or visual elements were changed.

According to one or more embodiments, the electronic device 100 may update the user preference information not only based on the chatbot service and/or the voice recognition assistant service, but also the updated context information. For example, the electronic device 100 may obtain the updated context information based on the updated internal context of the electronic device 100, the updated external context of the electronic device 100, the updated real time context of the user, and the updated use context based on the use history of the user.

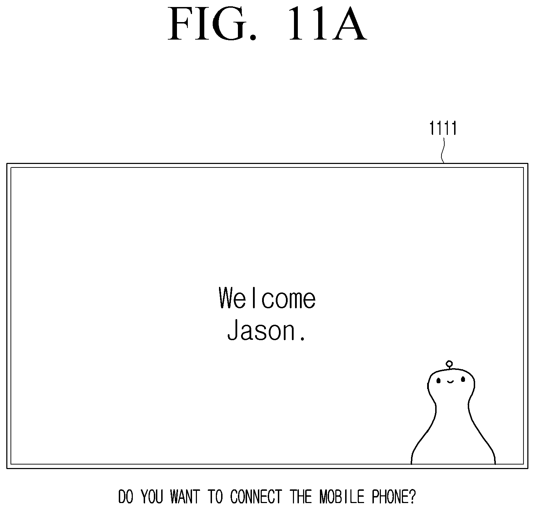

FIG. 11A to FIG. 11k are diagrams illustrating a method of providing a personalized UI screen according to one or more embodiments.

According to one or more embodiments, the electronic device 100 may provide a personalized UI screen, e.g., a home UI screen based on at least one of user information obtained through an onboarding process, user information obtained through the chatbot service, user information obtained through the voice recognition assistant service, and user information obtained from an external device.

For example, according to FIG. 11A, when an onboarding process is initiated through a user account, the electronic device 100 may provide a welcome UI screen 1111, and inquire about whether to connect an external device (e.g., a mobile phone) connected to the user account. For example, the electronic device 100 may inquire to the user using a voice through the voice recognition assistant service. However, embodiments are not limited thereto, and the electronic device 100 may provide inquiries to the user by indicating a text through the chatbot service.

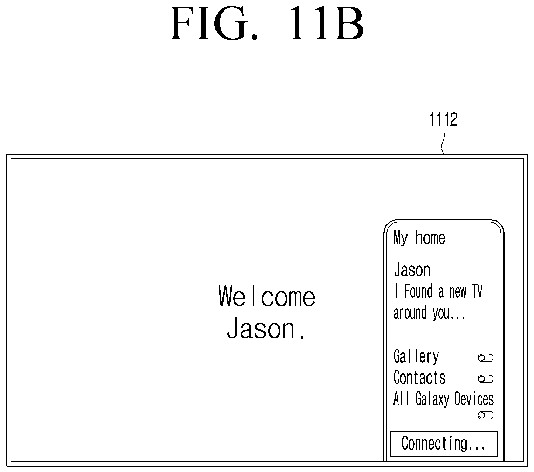

According to FIG. 11B, the electronic device 100 may perform connection with an external device according to a user response that the user wants to connect to the external device, and provide the connecting process through the UI screen 1112. For example, the electronic device 100 may connect with the external device based on the user's voice response, text response, and button response using a remote control, etc.

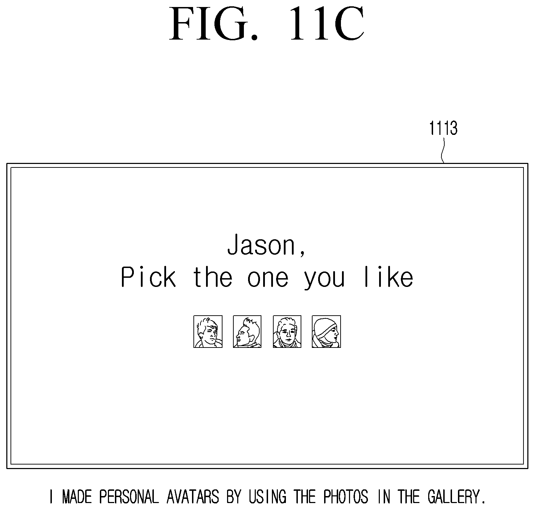

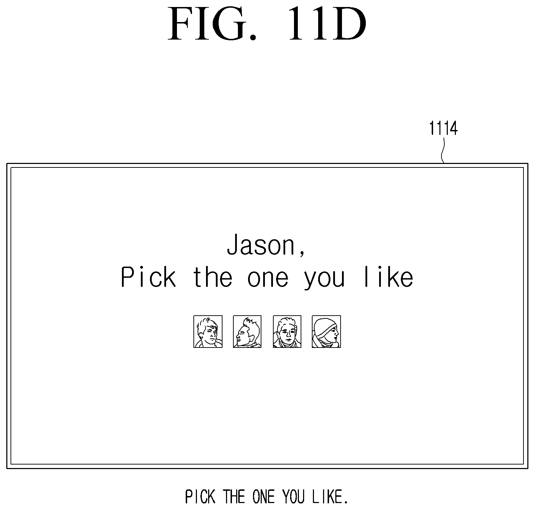

According to FIG. 11C and FIG. 11D, the electronic device 100 may obtain user photographs from an external device and generate user avatars, and provide them for example as UI screen 1113 and/or UI screen 1114). For example, the electronic device 100 may provide a guide such as "I made personal avatars by using the photos in the gallery" and "Pick the one you like" as a voice or a text.

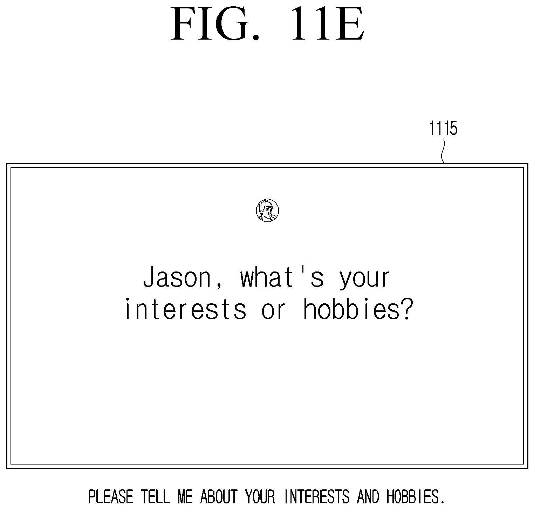

According to FIG. 11E, the electronic device 100 may provide a UI screen 1115 including a question for obtaining user information. For example, the electronic device 100 may provide the UI screen 1115 including a question such as "Please tell me about your interests and hobbies." In this case, the electronic device 100 may also provide the question using a voice.

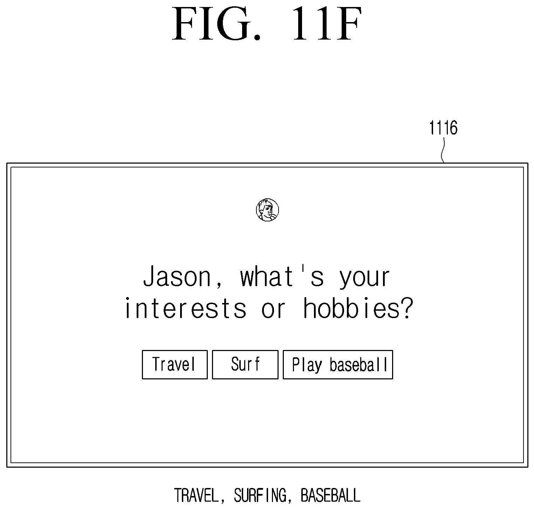

According to FIG. 11F, the electronic device 100 may provide a UI screen 1116 including a user response for a question. For example, if the user provides a response such as "travel," "surfing," and "baseball," the electronic device 100 may provide the guide screen 1116 including the response.

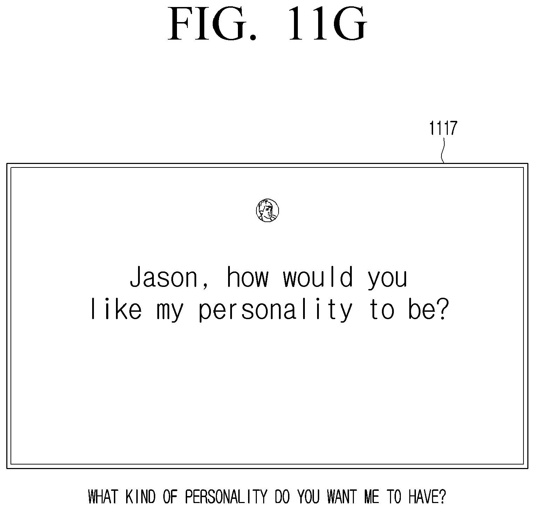

According to FIG. 11G, the electronic device 100 may provide a UI screen 1117 including a question for setting the characteristic of the voice recognition assistant service or the chatbot service. For example, the electronic device may provide the UI screen 1117 including a question such as "What kind of personality do you want me to have?" In this case, the electronic device 100 may also provide the question using a voice.

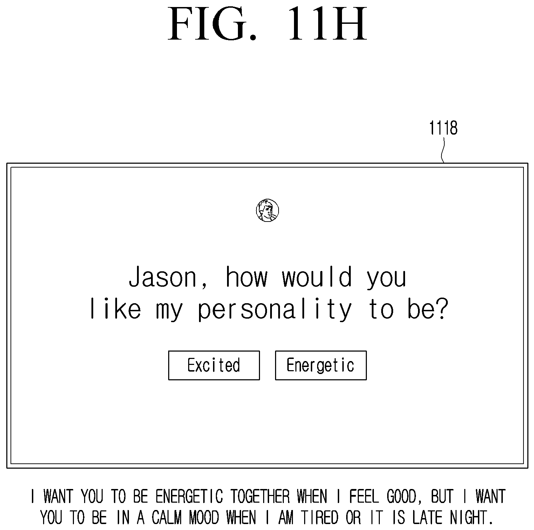

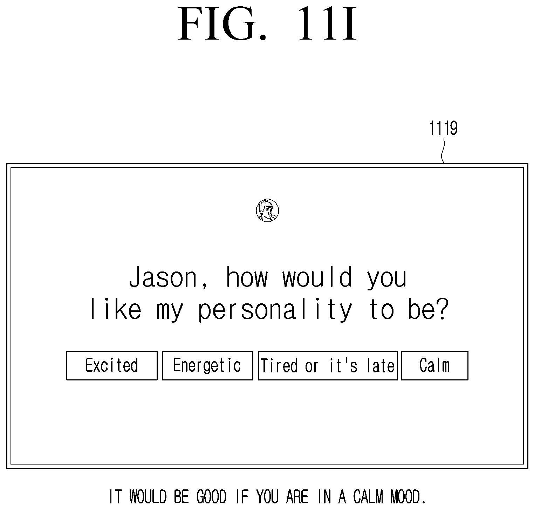

According to FIG. 11H and FIG. 11I, the electronic device 100 may provide a UI screen 1118 including a user response for a question. For example, if the user provides a response such as "I want you to be energetic together when I feel good, but I want you to be in a calm mood when I am tired or it is late night," the electronic device 100 may provide the UI screen 1119 including the response or the keyword of the response.

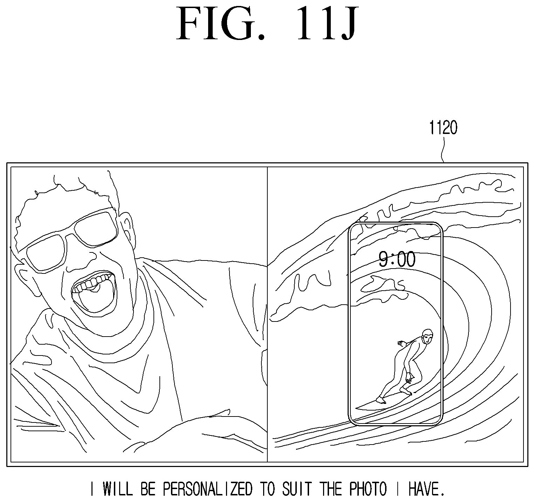

According to FIG. 11J, the electronic device 100 may provide a UI screen 1120 including a phrase guiding or indicating that a UI screen is provided based on the collected user information. For example, the electronic device 100 may provide the UI screen 1120 including a guide such as "I will be personalized to suit the photo I have."

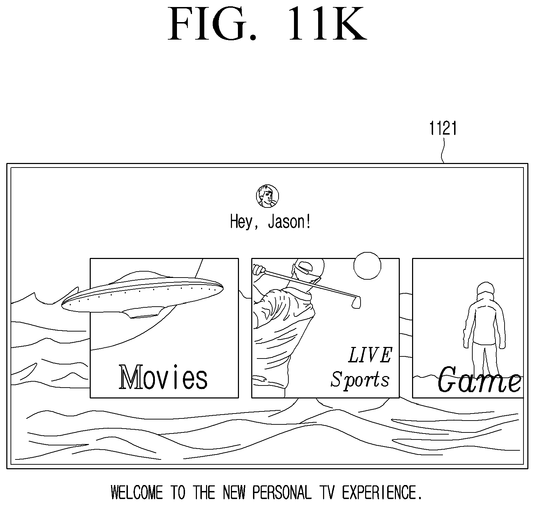

According to FIG. 11K, the electronic device 100 may provide a personalized UI screen 1121 based on the collected user information. For example, the electronic device 100 may provide the UI screen 1120 wherein the user's preferred contents are arranged based on the user's preferred UI layout and UI asset.

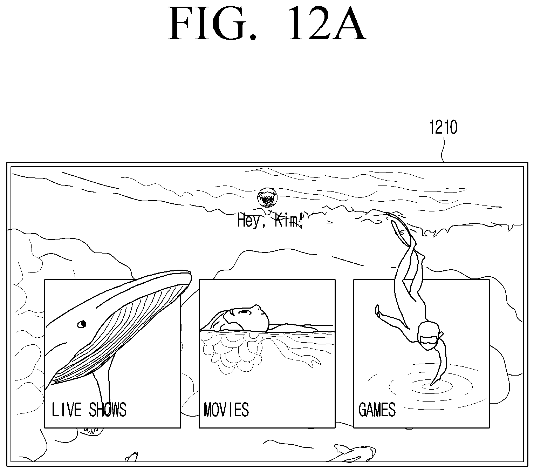

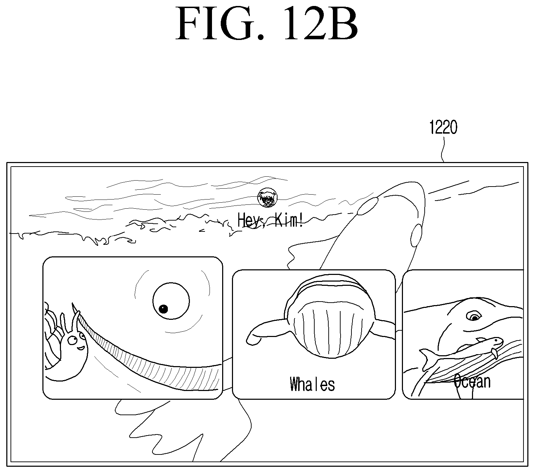

FIG. 12A and FIG. 12B are diagrams illustrating an example of a personalized UI screen according to one or more embodiments.

According to one or more embodiments, the electronic device 100 may provide a personalized UI screen, e.g., a personalized home UI screen based on the user preference information and the user context information.

According to one or more embodiments, the first home UI screen 1210 illustrated in FIG. 12A and the second home UI screen 1220 illustrated in FIG. 12B may be home UI screens generated based on the user preference information and the user context information.

According to one or more embodiments, the electronic device 100 may selectively provide any one of first home UI screen 1210 and the second home UI screen 1220 according to a real time context. For example, the electronic device 100 may provide different home UI screens according to the time, the weather, the emotion, etc.

For example, the electronic device 100 may provide the first home UI screen 1210 generated based on contents that the user mainly views in the morning, and provide the second home UI screen 1220 generated based on contents that the user mainly views in the evening.

For example, the electronic device 100 may provide the first home UI screen 1210 generated based on contents that the user mainly views in weekday evenings, and provide the second home UI screen 1220 generated based on contents that the user mainly views in weekend evenings.

According to the aforementioned various embodiments, the electronic device 100 may naturally communicate with a user by using natural language processing and generative AI technologies, and may generate in real time a UI screen personalized based on the tastes and experiences of the user identified through communication with the user, and provide the screen. Accordingly, the user's convenience can be improved.

According to one or more embodiments, methods according to the aforementioned various embodiments of the disclosure may be implemented just with software upgrade, or hardware upgrade of conventional electronic devices and/or servers.

Also, the aforementioned various embodiments of the disclosure may be performed through an embedded server provided on an electronic device, or an external server of an electronic device.

According to one or more embodiments, the aforementioned various embodiments may be implemented as software including instructions stored in machine-readable storage media, which may be read by machines (e.g., computers). The machines may refer to devices that call instructions stored in a storage medium, and can operate according to the called instructions, and the devices may include the electronic device according to the aforementioned embodiments (e.g., an electronic device A). When an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

Also, according to one or more embodiments of the disclosure, the methods according to the aforementioned various embodiments may be provided while being included in a computer program product. A computer program product refers to a product, and it can be traded between a seller and a buyer. A computer program product can be distributed on-line in the form of a storage medium that is readable by machines (e.g., compact disc read only memory (CD-ROM)), or through an application store (e.g., Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components according to the aforementioned various embodiments (e.g., a module or a program) may consist of a singular object or a plurality of objects. Also, among the aforementioned corresponding sub components, some sub components may be omitted, or other sub components may be further included in the various embodiments. Alternatively or additionally, some components (e.g., a module or a program) may be integrated as an object, and perform the functions that were performed by each of the components before integration identically or in a similar manner. A module, a program, or operations performed by other components according to the various embodiments may be executed sequentially, in parallel, repetitively, or heuristically. Or, at least some of the operations may be executed in a different order or omitted, or other operations may be added.

Also, while some embodiments of the disclosure are shown and described, embodiments are not limited to the aforementioned specific embodiments, and it should be apparent that various modifications may be made by those having ordinary skill in the technical field to which the disclosure belongs, without departing from the scope of the disclosure as claimed by the appended claims. Further, it is intended that such modifications are not to be interpreted independently from the technical idea or prospect of the disclosure.

## Claims

1. An electronic device comprising:
at least one processor; and
a memory configured to store at least one instruction which, when executed by the at least one processor, causes the electronic device to:
identify content preference information associated with a user based on natural language processing (NLP),
determine content architecture information corresponding to a user interface (UI) screen and visual element information corresponding to the UI screen based on the content preference information and context information associated with the user, and
generate the UI screen based on the content architecture information and the visual element information.

2. The electronic device of claim 1, wherein the at least one instruction further causes the electronic device to:
identify visual preference information associated with the user and digital action preference information associated with the user based on the natural language processing,
determine integrated preference information associated with the user based on the content preference information, the visual preference information, and the digital action preference information, and
determine the content architecture information and the visual element information based on the integrated preference information and the context information.

3. The electronic device of claim 1,
wherein the at least one instruction further causes the electronic device to:
filter a preferred content from among a plurality of contents based on the content preference information and the context information, and
determine the content architecture information by inputting information about the preferred content into a first neural network model, and
wherein the content architecture information comprises category information and priority information regarding the filtered content.

4. The electronic device of claim 1,
wherein the at least one instruction further causes the electronic device to:
determine information related to a visual layout based on the content architecture information, and
determine the visual element information by inputting the information related to the visual layout into a second neural network model, and
wherein the visual element information comprises UI layout information and UI asset information for the UI screen.

5. The electronic device of claim 1, wherein the at least one instruction further causes the electronic device to:
filter a preferred content from among a plurality of contents based on the content preference information and the context information, and
determine the content architecture information and the visual element information by inputting information related to the preferred content and information related to a visual layout into a third neural network model.

6. The electronic device of claim 1, wherein the at least one instruction further causes the electronic device to:
determine the content preference information by applying the NLP to user information obtained using at least one of an onboarding process performed by the electronic device, a chatbot service, a voice recognition assistant service, and an external device.

7. The electronic device of claim 6, wherein the at least one instruction further causes the electronic device to:
identify an intimacy level between the user and the electronic device based on at least one of a level of the user information, use frequency of the user with respect to the electronic device, and a use pattern of the user with respect to the electronic device,
select a question for obtaining additional information associated with the user based on the intimacy level,
obtain the additional information using at least one of the chatbot service and the voice recognition assistant service based on the selected question, and
update the UI screen based on the additional information.

8. The electronic device of claim 1, wherein the at least one instruction further causes the electronic device to:
determine the context information based on an internal context of the electronic device, an external context of the electronic device, a real-time context of the user, and a use context based on use history of the user.

9. The electronic device of claim 1, wherein the at least one instruction further causes the electronic device to:
obtain the content preference information using a large language model (LLM).

10. The electronic device of claim 1, wherein the at least one instruction further causes the electronic device to:
generate a personalized home UI screen including a home background image personalized to the user, content categories, representative images for each content category, and UI fonts based on the content architecture information and the visual element information.

11. A method of controlling an electronic device, the method comprising:
identifying content preference information associated with a user based on natural language processing (NLP);
determining content architecture information corresponding to a user interface (UI) screen and visual element information corresponding to the UI screen based on the content preference information and context information associated with the user; and
obtaining the UI screen based on the content architecture information and the visual element information.

12. The method of claim 11,
further comprising:
identifying visual preference information associated with the user and digital action preference information associated with the user based on the natural language processing; and
determining integrated preference information associated with the user based on the content preference information, the visual preference information, and the digital action preference information, and
wherein the content architecture information and the visual element information are determined based on the integrated preference information and the context information.

13. The method of claim 11,
further comprising:
filtering a preferred content from among a plurality of contents based on the content preference information and the context information; and
determining the content architecture information by inputting information on the preferred content into a first neural network model, and
wherein the content architecture information comprises category information and priority information regarding the filtered content.

14. The method of claim 11, further comprising:
obtaining information related to a visual layout based on the content architecture information; and
obtaining the visual element information by inputting the information related to the visual layout into a second neural network model, and
wherein the visual element information comprises UI layout information and UI asset information for the UI screen.

15. A non-transitory computer-readable medium storing computer instructions which, when executed by a processor of an electronic device, cause the electronic device to:
identify content preference information of a user based on natural language processing (NLP);
determine content architecture information corresponding to a user interface (UI) screen and visual element information corresponding to the UI screen based on the content preference information and context information associated with the user; and
obtain the UI screen based on the content architecture information and the visual element information.
